# EUROPEAN PATENT APPLICATION

(11) **EP 3 566 762 A2**
(43) Date of publication of application: **13.11.2019**
(21) Application number: 19170498.0
(22) Date of filing: 23.04.2019
(51) Int. Cl.: B01D 53/14, C10G 29/20, C10L 3/10, B01D 53/52

(54) **METHODS AND COMPOSITIONS FOR SCAVENGING SULFIDES AND CARBON DIOXIDE FROM PETROLEUM AND NATURAL GAS**

(30) Priority: 19.04.2018 US 201862660066 P; 20.08.2018 US 201862720003 P; 18.04.2019 US 201916388565
(71) Applicant: Nexgen Oilfield Chemicals, LLC, The Woodlands, TX 77381 (US)
(72) Inventor: BEGEAL, James, The Woodlands, TX Texas 77381 (US); WESTLUND, Gary, The Woodlands, TX Texas 77381 (US); WILLIAMSON, Chris, The Woodlands, TX Texas 77381 (US)
(74) Representative: Bond, Christopher William

(57) **Abstract**

An aromatic imine blend includes an aromatic imine and a de-foaming agent, surfactant, amine, hydrotrope, alcohol, amino acid, ether, alkalinity stabilizer, or a combination thereof. A process of removing carbon dioxide or a sulfide from oil, water, or natural gas includes supplying an oil, water, or natural gas stream and contacting the oil, water, or natural gas stream with an aromatic amine blend. The aromatic imine blend includes an aromatic imine and a de-foaming agent, surfactant, amine, hydrotrope, alcohol, amino acid, ether, alkalinity stabilizer, or a combination thereof.

## Description

### CROSS-REFERENCE TO RELATED APPLICATIONS

This application claims priority from U.S. provisional application number 62/720,003, filed August 20, 2018, U.S. provisional application number 62/660,066 filed April 19, 2018 and U.S. non-provisional application number 16/388,565 filed 18 April 2019.

### FIELD

The present disclosure generally relates to the scavenging of hydrogen and organic sulfides.

### BACKGROUND

Oil and natural gas occur naturally in geologic formations beneath the earth's surface and often contain water, carbon dioxide, sulfur, hydrogen sulfides and organic sulfides. Water and natural gas containing sulfides are considered to be "sour." Hydrogen sulfide and organic sulfides (hereinafter "sulfides") are malodorous and toxic. The concentration of hydrogen sulfide in natural gas may range from 0.1 ppm to greater than 150,000 ppm.

Hydrogen sulfide and carbon dioxide are acid gases that are corrosive in gaseous form and when dissolved in liquids. Sulfides and carbon dioxide may corrode steel piping during transport and storage. Because of the corrosivity of sulfides and carbon dioxide, and toxicity of sulfides, natural gas and oil producers often remove the sulfides and carbon dioxide before transport. Natural gas and oil processing plants may be located in producing oil and natural gas fields to strip the sulfides and carbon dioxide from the oil and natural gas stream before transport. Oil and natural gas processing plants may include bubble columns, packed columns, tray columns, and other methods to absorb sulfides and carbon dioxide into a liquid, subjecting the oil or gas to countercurrent flow while reacting the oil or gas with scavengers. These scavengers include ethanolamines, triazines, formaldehyde, and glyoxal combinations.

Traditional scavengers include triazines, particularly those formed by the reaction of formaldehyde and monoethanolamine. Trazines are traditionally viewed as safer than formaldehyde, having a good scavenging capacity, and having a lower cost compared to other scavengers. However, triazines contain free formaldehyde-a carcinogen-and pose health concerns. Triazines that react with sulfides may form solids that deposit in pipes and equipment.

### SUMMARY

A sulfide scavenger is disclosed. The sulfide scavenger is a reaction product of an aromatic aldehyde and an amine, wherein a pre-reaction mixture of aromatic aldehyde and amine is from 5% to 80% by weight of the total pre-reaction mixture.

A method for forming a sulfide scavenger is disclosed that includes blending an aromatic imine with an amine.

A sulfide scavenger is disclosed. The sulfide scavenger is a cold blend of an aromatic aldehyde and an amine, wherein the blend of aromatic aldehyde and amine is from 5% to 80% by weight of the total blend.

### DETAILED DESCRIPTION

The following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

Certain embodiments of the present disclosure are directed to compositions and methods of using an aromatic imine in an aromatic imine blend with de-foaming agents, surfactants, amines, hydrotropes, alcohols, amino acids, ethers, and alkalinity stabilizers as a sulfide and/or carbon dioxide scavenger in a natural gas, oil, or water stream. The aromatic imine blend may be formed *in-situ,* such as in process equipment or in a wellbore or underground formation, or *ex-situ* and injected or pumped into the natural gas, oil, or water stream.

As used herein, an aromatic imine is a compound or plurality of compounds formed from the reaction between an aromatic aldehyde and a primary amine, secondary amine, tertiary amine, or amine derivative. As used herein, an "aromatic aldehyde" is an aldehyde with an aromatic ring group attached and lacking a reactive aliphatic alpha hydrogen.

Primary and secondary amines suitable for use as described herein include but are not limited to ethanolamine, diethanolamine, diglycol-amine, aniline, ethylene diamine, aminoethylethanolamine, ethyl amine, isopropanolamine, dibutyl amine, diethylene triamine, tetraethylene pentamine, methyl anthranilate, and ammonia. Diamines and multiple-amine compounds may also be used. Such compounds have two or more amine groups in their molecule. Non-limiting examples are ethylenediamine, triethylenetetramine, and tetraethylenepentamine.

Methods of manufacture of aromatic imines and specific examples of aromatic imines are disclosed in US 7,985,881, which is incorporated herein by reference in its entirety.

Use of aromatic imines in natural gas, oil, or water stream scavenging applications has presented a number of problems. For instance, the reaction product of an aromatic imine and carbon dioxide or hydrogen sulfide in the natural gas, oil, or water stream may result in a waxy solid. The waxy solid may deposit in a wellbore or underground formation, piping, pumps, stripping equipment, or storage vessels. In addition, when carbon dioxide and sulfides are stripped, such as from natural gas, the scavenging solution may foam in stripping and other separation equipment, decreasing the efficiency of the separation. By combining the aromatic imine with de-foaming agents, surfactants, amines, hydrotropes, alcohols, amino acids, ethers, and/or alkalinity stabilizers in an aromatic imine blend, waxy solid deposits and foaming may be decreased or eliminated. Further, by combining the aromatic imine with de-foaming agents, surfactants, amines, hydrotropes, alcohols, amino acids, ethers, and/or alkalinity stabilizers in an aromatic imine blend, stoichiometric capacity and reaction time kinetics may be increased.

Non-limiting examples of de-foaming agents useful in aromatic imine blends of the present disclosure include glycols, siloxanes, silicas, surfactants, fluorosilicone, and silicone. In certain non-limiting embodiments, the concentration of the de-foaming agent in the imine blend may be between 200 ppm and 20% or between 500 ppm and 15%.

Non-limiting examples of surfactants include non-ionic surfactants, including, but not limited to alcohol ethoxylates, (both primary and secondary), alkyl polyglucosides, amine oxides, block polymers of ethylene & propylene oxide, polyglycerol esters of fatty acids, amides, and carboxylates, as well as, cationic, and anionic surfactants. In certain non-limiting embodiments, the concentration of the surfactant in the imine blend may be between 200 ppm and 20% or between 500 ppm and 15%.

Non-limiting examples of hydrotropes include sodium and potassium salts of benzene, xylene, toluene and cumene sulfonates, sodium and potassium salts of phosphate esters, sulfonates of oils and fatty acids, and sulfonates of naphthalene and alkyl naphthalene. In certain non-limiting embodiments, the concentration of the hydrotrope in the imine blend may be between 200 ppm and 20% or between 500 ppm and 15%.

Non-limiting examples of alcohols include primary and secondary alcohols (including, for example, methyl, propyl, butyl, ethyl, cetyl, and octyl, alcohols) ethylene and diethylene glycol, propylene and dipropylene glycol, glycerol, and sorbitol. In certain non-limiting embodiments, the concentration of the alcohol in the imine blend may be between 200 ppm and 20% or between 500 ppm and 15%.

Non-limiting examples of ethers include glycol ethers including ethylene and propylene adducts (mono, di, tri)- polyethylene glycol, and polypropylene glycol. In certain non-limiting embodiments, the concentration of the ether in the imine blend may be between 200 ppm and 20% or between 500 ppm and 15%.

Non-limiting examples of alkalinity stabilizers include sodium and potassium carbonate and bicarbonate, calcium bicarbonate, sodium and potassium phosphate and biphosphate, sodium acetate, amines- primary and secondary, tertiary, polyetheramines, and salts of hydroxides. In certain non-limiting embodiments, the concentration of the alkalinity stabilizer in the imine blend may be between 200 ppm and 20% or between 500 ppm and 15%.

Amines are organic compounds derived from ammonia with substitution of one or all of the hydrogens with alkyl or aryl groups, retaining a basic nitrogen atom with one lone pair of electrons. They can be classified as Primary, Secondary, Tertiary, or Cyclic.
Primary - One of three hydrogen atoms is replaced by alkyl or aryl groups
Secondary - Two of the three hydrogen atoms are replaced by alkyl or aryl groups
Tertiary - All three hydrogen atoms are replaced by alkyl or aryl groups

Monoethanolamine (MEA), diethanolamine (DEA) and methyl diethanolamine (MDEA), diisopropanolamine (DIPA) and aminoethoxyethanol/diglycolamine (DGA), diethylenetriamine (DETA), and triethylenetetramine (TETA) may be used in embodiments of the present disclosure. All are aqueous solutions of alkylamines that may be used to selectively strip sulfides and carbon dioxide from an acid-gas rich hydrocarbon gas stream.

In certain non-limiting embodiments, the concentration of MEA in the imine blend may be between 200 ppm and 20% or between 500 ppm and 15%. Loading may be limited to 0.30 - 0.35 moles acid gas per mole amine with carbon steel because of corrosivity issues; loading as high as 0.70 - 0.90 mole/mole may be used with stainless steel. Due to the high pH of MEA, carbon dioxide may be removed in the process of stripping hydrogen sulfide to pipeline specification.

In certain non-limiting embodiments, the concentration of DEA in the imine blend may be between 200 ppm and 20% or between 500 ppm and 15% and may be limited to 0.30 - 0.35 mole/mole loading in carbon steel, but can be loaded to 1 mole/mole when using stainless steel or corrosion inhibitors. Degradation products are typically less corrosive than MEA. DEA has a lower affinity for carbon dioxide and hydrogen sulfide compared to MEA and may not produce pipeline specification natural gas for some systems. Under low pressure and short residence time, DEA can be selective for hydrogen sulfide or carbon dioxide.

In certain non-limiting embodiments, the concentration of DGA in the imine blend may be between 200 ppm and 20% or between 500 ppm and 15%. Corrosion issues may prevent loading above 0.35 mole/mole. DGA may be preferentially selective for carbon dioxide over hydrogen sulfide, but DGA has a higher pH than MEA, allowing DGA to achieve pipeline specification.

In certain non-limiting embodiments, the concentration of MDEA in the imine blend may be between 200 ppm and 20% or between 500 ppm and 15%. Loading ranges of 0.70 - 0.80 can be achieved due to significantly reduced corrosion issues compared to other amines. Oxygen exposure will produce corrosive acids and may result in build-up of iron sulfide. MDEA is also selective towards hydrogen sulfide over carbon dioxide, has a lower vapor pressure, lower heats of reaction, and higher resistance to degradation compared to other amines.

Non-limiting examples of primary amines are shown in Table 1.

**Table 1**

| **Structural formula** | **Traditional name** | **IUPAC preferred name** |
|---|---|---|
| (CH₃)₂NH | Dimethylamine | N-methylmethanamine |
| CH₃CH₂NHCH₃ | Ethylmethylamine | N-methylethanamine |
| CH₃CH₂CH₂CH₂NHCH₂CH₃ | Butylethylamine | N-ethylbutanamine |
| CH₃CH₂CH₂CH(CH₃)NHCH₂CH₃ | (Ethyl-1-methylbutyl)amine | N-ethyl-pentan-2-amine |
| (CH₃CH₂)₃N | Triethylamine | N,N-diethylethanamine |
| CH₃CH₂CH₂CH₂N(CH₃)CH₂CH₃ | Butylethylmethylamine | N-ethyl-N-methylbutan-1-amine |
| CH₃CH(CH₃)CH(CH₃)CH(CH₃)N(CH₂CH₃)₂ | (Diethyl-1,2,3-trimethylbutyl)amine | N,N-diethyl-3,4-dimethylpentan-2-amine |

Non-limiting examples of secondary and tertiary amines may be found in Table 2.

**Table 2**

| **Structural formula** | **Traditional name** | **IUPAC preferred name** | **Other name** |
|---|---|---|---|
| CH₃CH₂CH₂CH₂CH₂CH₂NH₂ | Hexylamine (n-Hexylamine) | Hexan-1-amine | 1-aminohexane |
| CH₃CH(NH₂)CH₂CH₂CH₂CH₃ | 1-methyl-n-pentylamine | Hexan-2-amine | 2-aminohexane |
| CH₃CH₂CH(NH₂)CH₂CH₂CH₃ | 1-ethyl-n-butylamine | Hexan-3-amine | 3-aminohexane |
| CH₃CH(NH₂)CH₂CH(CH₃)CH₃ | (1-methyl-3-methylbutyl)amine | 4-methylpentan-2-amine | 2-amino-4-methylpentane |
| CH₃CH(NH₂)CH(CH₃)CH₂CH₃ | (1-methyl-2-methylbutyl)amine | 3-methylpentan-2-amine | 2-amino-3-methylpentane |
| CH₃CH(CH₃)CH(NH₂)CH₂CH₃ | (1-ethy)-2-methypropyl)amine | 2-methylpentan-3-amine | 3-amino-2-melhylpropane |
| (CH₃)₂C(NH₂)CH₂CH₂CH₃ | (1,1-dimethylbutyl)amine | 2-methylpentan-2-amine | 2-amino-2-methylpentane |
| CH₃CH₂C(CH₃)(NH₂)CH₂CH₃ | (1-ethyl-1-methylpropyl)amine | 3-methylpentan-3-amine | 3-amino-3-methylpentane |

In certain embodiments, the aromatic imine blends may be used to remove sulfides and carbon dioxide in upstream applications. As used herein, "upstream" means oil, water and natural gas from the formation to the wellhead, for examples, in the wellbore and at the wellhead. In upstream applications, carbon dioxide and sulfides may be scavenged by the aromatic imine blends from the oil, water, or natural gas through injection or *in-situ* formation into such equipment as contact/scrubber tower, direct line injection, batch treating, capillary or umbilical injection.

In other embodiments, the aromatic imine blends may be used to remove sulfides and carbon dioxide in midstream applications. As used herein, "midstream" means oil, water and natural gas from the wellhead to the refining plant, including, but not limited to pipelines. In midstream applications, carbon dioxide and sulfides may be scavenged by the aromatic imine blends from the oil, water, or natural gas through injection or in-situ formation into such equipment as contact/scrubber tower, direct line injection, batch treating, capillary or umbilical injection.

In other embodiments, the aromatic imine blends may be used to remove sulfides and carbon dioxide in downstream applications. As used herein, "downstream" means oil, water and natural gas within the refining plant. In downstream applications, carbon dioxide and sulfides may be scavenged by the aromatic imine blends from the oil, water, or natural gas through injection or in-situ formation into such equipment as contact/scrubber tower, direct line injection, batch treating, capillary or umbilical injection.

The reaction of the aromatic imine blend with the oil, water, or natural gas stream may result in a clean oil, water, or natural gas stream and a spent scavenging solution stream. In certain embodiments, the aquatic toxicity of the spent scavenging solution stream of the present disclosure, *i.e*., use of an aromatic imine blend, is less than the aquatic toxicity with use of triazines.

In yet another embodiment, the reaction product of an aromatic aldehyde and certain amines may be used as a sulfide scavenger. An example of an aromatic aldehyde for use in this embodiment is benzaldehyde. Examples of amine for use in this embodiment are diethylamine, 2-methylpiperidine, 2-ethylpiperidine, dibutylamine, N-methylcyclohexylamine or combinations thereof. In certain instances, the reaction product is a reaction product of benzaldehyde and diethylamine, 2-methylpiperidine, 2-ethylpiperidine, dibutylamine, N-methylcyclohexylamine or combinations thereof. In this embodiment, the amines used to form the reaction product do not include alcoholic amines, such as monoethanolamine (MEA). Reaction products of an aromatic aldehyde and an alcoholic amine perform poorly as sulfide scavengers and result in solids production that deposit in pipes and equipment. Certain other amines, such as diethylene triamine (DETA), propylamine, and butylamine also perform poorly as sulfide scavengers when combined with aromatic aldehydes. In this embodiment, the amount of aromatic aldehyde used in the reaction product may exceed the stoichiometric amount for manufacture for an imine. For example, the amount of aromatic aldehyde in the pre-reaction mixture of aromatic aldehyde and amine may be from 5% to 80% or from about 5% to 50% of the total mixture by weight.

The reaction product of the aromatic aldehyde and amine blends may be used to remove sulfides and carbon dioxide in upstream, midstream, or downstream applications. In these applications, carbon dioxide and sulfides may be scavenged by the reaction products from the oil, water, or natural gas through injection or *in-situ* formation into such equipment as contact/scrubber tower, direct line injection, batch treating, capillary or umbilical injection.

In yet another embodiment, a sulfide scavenger may be formed from an imine, including, but not limited to an aromatic imine, in combination with an amine. As described above, an imine may be formed by reacting an aldehyde with a first amine. In certain examples of this embodiment, the first amine and a stoichiometric excess of the aromatic aldehyde are combined to form a reaction product that includes an imine. This reaction product is subsequently reacted with a second amine, which may be the same or different than the first amine, to form a sulfide scavenger. In a non-limiting example, a propylamine is combined with a stoichiometric excess of benzaldehyde to form a reaction product. The reaction product is subsequent combined by diethylamine to form the sulfide scavenger.

In yet another embodiment, a cold blend of an aromatic aldehyde and certain amines may be used as a sulfide scavenger. A "cold blend" is defined as a room temperature blend of the aromatic aldehyde and certain amines where, while some reaction may occur between the aromatic aldehyde and the amine, most of the of the aromatic aldehyde and the amine do not react with each other. "Room temperature" refers to a temperature of between about 55°F and 85°F. An example of an aromatic aldehyde for use in this embodiment is benzaldehyde. An example of an amine for use in this embodiment is diethylamine. In this embodiment, the amines used to form the reaction product do not include alcoholic amines, such as monoethanolamine (MEA). Blends of an aromatic aldehyde and an alcoholic amine perform poorly as sulfide scavengers and result in solids production that deposit in pipes and equipment. Certain other amines, such as diethylene triamine (DETA), propylamine, and butylamine also perform poorly as sulfide scavengers when blended with aromatic aldehydes. In certain embodiments, the amine is diethylamine 2 methylpiperidine, 2 ethylpiperidine, dibutylamine, N methylcyclohexylamine or combinations thereof. The amount of aromatic aldehyde in the cold blend of aromatic aldehyde and amine may be from 5% to 80% or from about 5% to 50% of the total mixture by weight.

The cold blend of the aromatic aldehyde and amine blends may be used to remove sulfides and carbon dioxide in upstream, midstream, or downstream applications. In these applications, carbon dioxide and sulfides may be scavenged by the cold blend from the oil, water, or natural gas through injection or *in-situ* formation into such equipment as contact/scrubber tower, direct line injection, batch treating, capillary or umbilical injection.

### Examples

### Example 1

In a Bench top gas breakthrough tower test, 40 grams of the reaction products and comparative run #7 using only benzaldehyde as shown in Table 1 were evaluated. Runs #2 - #5 used a 90%/10% benzaldehyde to amine ratio. A gas stream containing 150,000 ppm hydrogen sulfide was used and concentration of sulfide in the exiting gas stream was measured over time. The results are shown below in Table 1:

**Table 1**

| | **Run 1: 37.5% MEA Triazine (Formaldehyde and Monoethanolamine)** | **Run 2: Benzaldehyde 90% / Diethylamine 10%** | **Run 3: Benzaldehyde 90% / Diethylenetriamine 10%** | **Run 4: Benzaldehyde 90% / Propylamine 10%** | **Run 5: Benzaldehyde 90% / Butylamine 10%** | **Run 6: Benzaldehyde 90% / Butylamine 10%** | **Run 7: Benzaldehyde 100%** |
|---|---|---|---|---|---|---|---|
| **Minutes** | **PPM H2S** | **PPM H2S** | **PPM H2S** | **PPM H2S** | **PPM H2S** | **PPM H2S** | **PPM H2S** |
| 1 | 0.0 | 0.0 | 0.0 | 0.0 | 0.0 | 0.0 | 0.0 |
| 2 | 0.0 | 0.0 | 0.0 | 0.0 | 0.0 | 0.0 | 50.0 |
| 3 | 0.0 | 0.0 | 0.0 | 0.0 | 0.0 | 0.0 | |
| 4 | 4.2 | 0.0 | 50.0 | 0.0 | 0.0 | 0.0 | |
| 5 | 6.0 | 0.0 | | 0.0 | 0.0 | 0.0 | |
| 6 | 6.8 | 0.0 | | 50.0 | 50.0 | 50.0 | |
| 7 | 6.8 | 0.0 | | | | | |
| 8 | 5.6 | 0.0 | | | | | |
| 9 | 5.6 | 0.0 | | | | | |
| 10 | 5.6 | 0.0 | | | | | |
| 15 | 9.8 | 0.0 | | | | | |
| 20 | 11.7 | 0.0 | | | | | |
| 30 | 11.9 | 0.0 | | | | | |
| 45 | 14.4 | 0.0 | | | | | |
| 77 | 50.9 | 0.0 | | | | | |
| 90 | | 0.0 | | | | | |
| 100 | | 0.0 | | | | | |
| 120 | | 0.0 | | | | | |
| 150 | | 0.0 | | | | | |
| 180 | | 0.0 | | | | | |
| 200 | | 0.0 | | | | | |
| 224 | | 0.0 | | | | | |
| 240 | | 50.0 | | | | | |
| 270 | | | | | | | |
| 300 | | | | | | | |

As shown in Table 1, benzaldehyde alone was the least effective, with hydrogen sulfide breakthrough within 2 minutes. The reaction products of DETA and benzaldehyde, propylamine and benzaldehyde, and butylamine with benzaldehyde also performed poorly, with breakthroughs in 4 to 6 minutes. The triazine used in this example showed early breakthrough of hydrogen sulfide, with significant amounts of hydrogen sulfide breakthrough between 45 and 77 minutes. In contrast, the reaction product of a 90%/10% benzaldehyde/diethylamine mixture did not show a significant breakthrough of hydrogen sulfide until between 224 and 240 minutes.

### Example 2

In a Bench top gas breakthrough tower test, 40 grams of a cold blend and comparative run #2 using only benzaldehyde as shown in Table 2 were evaluated. The remaining runs used a cold blend composition as shown in Table 2. A gas stream containing 150,000 ppm hydrogen sulfide was used and concentration of sulfide in the exiting gas stream was measured over time. The results are shown below in Table 2:

**Table 2**

| | **Run 1 37.5% MEA Triazine (Formaldehyde and Monoethanolamine)** | **Run 2 Benzaldehyde 100%** | **Run 3 Benzaldehyde 90% / Diethylamine 10%** | **Run 4 Benzaldehyde 70% / 30% 2-Methylpiperdine** | **Run 5 Benzaldehyde 80% / 20% Dibutylamine** | **Run 6 Benzaldehyde 90% / 30% N-Methylcyclohexylamine** | **Run 7 Benzaldehyde 70% / 30% 2-Ethylpiperdine** |
|---|---|---|---|---|---|---|---|
| **Minutes** | **PPM H2S** | **PPM H2S** | **PPM H2S** | **PPM H2S** | **PPM H2S** | **PPM H2S** | **PPM H2S** |
| 1 | 0.0 | 0.0 | 0.0 | 0.0 | 0.0 | 0.0 | 0.0 |
| 2 | 0.0 | 50.0 | 0.0 | 0.0 | 0.0 | 0.0 | 0.0 |
| 3 | 0.0 | | 0.0 | 0.0 | 0.0 | 0.0 | 0.0 |
| 4 | 4.2 | | 0.0 | 0.0 | 0.0 | 0.0 | 0.0 |
| 5 | 6.0 | | 0.0 | 0.0 | 0.0 | 0.0 | 0.0 |
| 6 | 6.8 | | 0.0 | 0.0 | 0.0 | 0.0 | 0.0 |
| 7 | 6.8 | | 0.0 | 0.0 | 0.0 | 0.0 | 0.0 |
| 8 | 5.6 | | 0.0 | 0.0 | 0.0 | 0.0 | 0.0 |
| 9 | 5.6 | | 0.0 | 0.0 | 1.2 | 0.0 | 0.0 |
| 10 | 5.6 | | 0.0 | 0.0 | 4.6 | 0.0 | 0.0 |
| 15 | 9.8 | | 0.0 | 0.0 | 5.2 | 0.0 | 0.0 |
| 20 | 11.7 | | 0.0 | 0.0 | 50.0 | 0.0 | 0.0 |
| 30 | 11.9 | | 0.0 | 0.0 | | 0.0 | 0.0 |
| 45 | 14.4 | | 0.0 | 0.0 | | 0.0 | 0.0 |
| 77 | 50.9 | | 0.0 | 32.2 | | 0.0 | 1.8 |
| 90 | | | 0.0 | 37.8 | | 12.4 | 50.0 |
| 100 | | | 0.0 | 50.0 | | 50.0 | |
| 120 | | | 1.2 | | | | |
| 150 | | | 1.2 | | | | |
| 180 | | | 4.6 | | | | |
| 200 | | | 5.2 | | | | |
| 224 | | | 27.4 | | | | |
| 240 | | | 50.0 | | | | |
| 270 | | | | | | | |
| 300 | | | | | | | |

As shown in Table 2, benzaldehyde alone was the least effective, with hydrogen sulfide breakthrough within 2 minutes. The triazine used in this example showed early breakthrough of hydrogen sulfide, with significant amounts of hydrogen sulfide breakthrough between 45 and 77 minutes. In contrast, the reaction product of a 90%/10% benzaldehyde/diethylamine cold blend did not show a significant breakthrough of hydrogen sulfide until between 224 and 240 minutes, with cold blends of benzaldehyde 70% / 30% 2-methylpiperdine, benzaldehyde 90% / 30% N-methylcyclohexylamine, and benzaldehyde 70% / 30% 2-ethylpiperdine also performing well.

The above examples demonstrate possible embodiments of the present disclosure. While the foregoing is directed to embodiments, versions and examples, which are included to enable a person of ordinary skill in the art to make and use the inventions when the information in this patent is combined with available information and technology, the disclosure is not limited to only these particular embodiments, versions and examples. Other and further embodiments, versions and examples may be devised without departing from the basic scope thereof and the scope thereof is determined by the claims that follow.

## Claims

1. A sulfide scavenger comprising:
a reaction product of an aromatic aldehyde and an amine, wherein a pre-reaction mixture of aromatic aldehyde and amine is from 5% to 80% by weight of the total pre-reaction mixture.

2. The sulfide scavenger of claim 1, wherein the amine is diethylamine, 2-methylpiperidine, 2-ethylpiperidine, dibutylamine, N-methylcyclohexylamine or combinations thereof.

3. The sulfide scavenger of claim 1 or claim 2, wherein the aromatic aldehyde is benzaldehyde.

4. The sulfide scavenger of any one of claims 1 to 3, wherein the pre-reaction mixture of aromatic aldehyde and amine is from 5% to 50% by weight of the total pre-reaction mixture.

5. A method for forming a sulfide scavenger comprising:
blending an aromatic imine with an amine.

6. The method of claim 5, wherein the aromatic imine is formed by reacting an aldehyde with a first amine, wherein the aldehyde is in stoichiometric excess.

7. The method of claim 6, wherein the first amine and the second amine are the same or different.

8. The method of claim 6, wherein the first amine and the second amine are different.

9. The method of claim 8, wherein the aromatic aldehyde is benzaldehyde, the first amine is propylamine, and the second amine is diethylamine.

10. A sulfide scavenger comprising:
a cold blend of an aromatic aldehyde and an amine, wherein the blend of aromatic aldehyde and amine is from 5% to 80% by weight of the total blend.

11. The sulfide scavenger of claim 10, wherein the amine is diethylamine. 2 methylpiperidine, 2 ethylpiperidine, dibutylamine, N methylcyclohexylamine or combinations thereof.

12. The sulfide scavenger of claim 10 or claim 11, wherein the aromatic aldehyde is benzaldehyde.

13. The sulfide scavenger of any one of claims 10 to 12, wherein the cold blend of aromatic aldehyde and amine is from 5% to 50% by weight of the total blend.
